## Europäisches Patentamt
## European Patent Office
## Office européen des brevets

(11) Veröffentlichungsnummer: **0 211 297
B1**

(12) **EUROPÄISCHE PATENTSCHRIFT**

(45) Veröffentlichungstag der Patentschrift:
**31.01.90**

(21) Anmeldenummer: **86109926.5**

(22) Anmeldetag: **19.07.86**

(51) Int. Cl.⁴: **B62D 35/00**

(54) Kraftfahrzeug, insbesondere Personenkraftwagen, mit wenigstens einem Spoiler.

(30) Priorität: **06.08.85 DE 3528113**

(43) Veröffentlichungstag der Anmeldung:
**25.02.87 Patentblatt 87/9**

(45) Bekanntmachung des Hinweises auf die Patenterteilung:
**31.01.90 Patentblatt 90/5**

(84) Benannte Vertragsstaaten:
**DE FR GB IT SE**

(56) Entgegenhaltungen:
**DE-A- 3 006 304
DE-A- 3 024 897**

(73) Patentinhaber: **Bayerische Motoren Werke
Aktiengesellschaft, Patentabteilung
AJ-3 Postfach 40 02 40 Petuelring 130,
D-8000 München 40(DE)**

(72) Erfinder: **Baron, Günter, Krokusweg 8,
D-8037 Neu-Esting(DE)**

(74) Vertreter: **Dexheimer, Rolf, Bayerische Motoren Werke
Aktiengesellschaft Postfach 40 02 40 Petuelring 130 -
AJ-31, D-8000 München 40(DE)**

ACTORUM AG

**Beschreibung**

Die Erfindung bezieht sich auf ein Kraftfahrzeug, insbesondere Personenkraftwagen, mit wenigstens einem Spoiler der im Oberbegriff des Patentanspruchs 1 genannten und aus der DE-A 3 006 304 hervorgehenden Art.

Bei der bekannten Einrichtung ist ein handelsüblicher, über Befestigungsfüße auf dem Fahrzeugdach angebrachter Gepäckträger an seiner Frontseite und bedarfsweise auch an seiner Rückseite mit einem Spoiler versehen, der mehrere Ausnehmungen zum Anbringen von Halteelementen für ein Transportgut aufweist. Hierbei verläuft der Spoiler bis zur Unterseite des Gepäckträgers, wobei dieser durch die Befestigungsfüße in einem Abstand zur Dachoberseite liegt. Somit entsteht zwischen dieser und der Gepäckträgerunterseite im Fahrbetrieb des Kraftfahrzeugs eine nicht unerhebliche, lästige Luftwirbelbildung. Bei Nichtgebrauch des Gepäckträgers beeinträchtigt dieser nicht nur die optische Wirkung des Kraftfahrzeugs, sondern durch den hierbei etwas höheren Luftwiderstand und durch das Gewicht des Gepäckträgers entsteht auch ein erhöhter Kraftstoffverbrauch.

Aufgabe der Erfindung ist es daher, einen Spoiler der im Oberbegriff des Patentanspruchs 1 genannten Art derart auszubilden und anzuordnen, daß unter Beibehaltung der Befestigungsmöglichkeit für ein Halteelement eines Transportguts auf einen handelsüblichen Gepäckträger verzichtet werden kann.

Zur Lösung der Aufgabe sind die im kennzeichnenden Teil des Patentanspruchs 1 dargelegten Merkmale vorgesehen.

Durch die erfindungsgemäß selbsttragende Ausbildung eines Spoilers und seine direkte Befestigung auf dem Fahrzeugdach kann dieser bei vorhandener Aufnahme zum lösbaren Anbringen eines Halteelements für ein Transportgut vorteilhafterweise unmittelbar als ein Gepäckträger verwendet werden, wobei jedoch der Spoiler auch bei Nichtgebrauch des Gepäckträgers auf dem Fahrzeugdach vorhanden und damit aufgabengemäß ausnutzbar ist.

Bei einem im Bereich der Windschutz- und der Heckscheibe liegenden Spoiler ist zweckmäßigerweise dessen außenliegender Randbereich abwärts geneigt gestaltet und damit der Karosserieform angepaßt, so daß im Fahrbetrieb des Kraftfahrzeugs der Luftstrom in optimaler Weise längs des Fahrzeugdaches fließen kann (Merkmale des Patentanspruchs 2).

Gemäß den Merkmalen des Patentanspruchs 3 weisen die Spoiler eine Anzahl kreisförmiger Ausnehmungen auf, in die jeweils ein mit einem entsprechenden Schaft versehenes Transportguthalteelement einsetzbar und beispielsweise mit dem Spoiler bayonettverschlußartig verrastbar ist.

Durch das Vorsehen von Längs- und Querstreben an den Spoilern kann darüber hinaus in einfacher Weise ein üblicher Gepäckträger gestaltet werden (Merkmale der Patentansprüche 4 und 5).

Die hierfür vorgesehenen Querstreben können gemäß dem Merkmal des Patentanspruchs 6 bei Nichtgebrauch in einfacher Weise in einem Hohlraum, der in den Spoilern vorgesehen ist, untergebracht werden. Hierfür ist der Spoiler zweckmäßigerweise zweiteilig ausgebildet (Merkmal des Patentanspruchs 7).

Ein Ausführungsbeispiel der Erfindung ist in der Zeichnung dargestellt und wird im folgenden erläutert. Es zeigt:

Fig. 1 einen Personenkraftwagen, auf dessen Dach sich zwei Spoiler befinden, wobei die Längsstreben eingeschwenkt sind,

Fig. 2 eine Draufsicht zu Fig. 1, wobei zwischen den Spoilern ein durch Längs- und Querstreben gebildeter Gepäckträger vorgesehen ist,

Fig. 3 einen Schnitt längs der Linie III-III in Fig. 2 in größerer Darstellung,

Fig. 4 einen Schnitt längs der Linie IV-IV in Fig. 2 in größerer Darstellung,

Fig. 5 und 6 jeweils ein Transportguthalteelement.

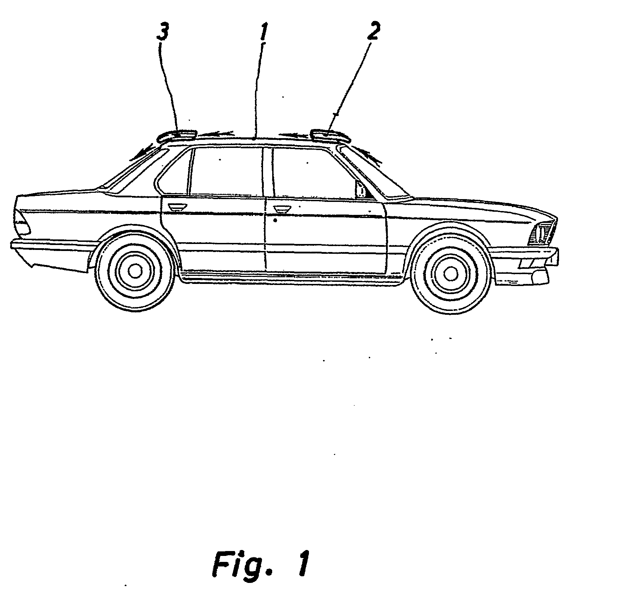

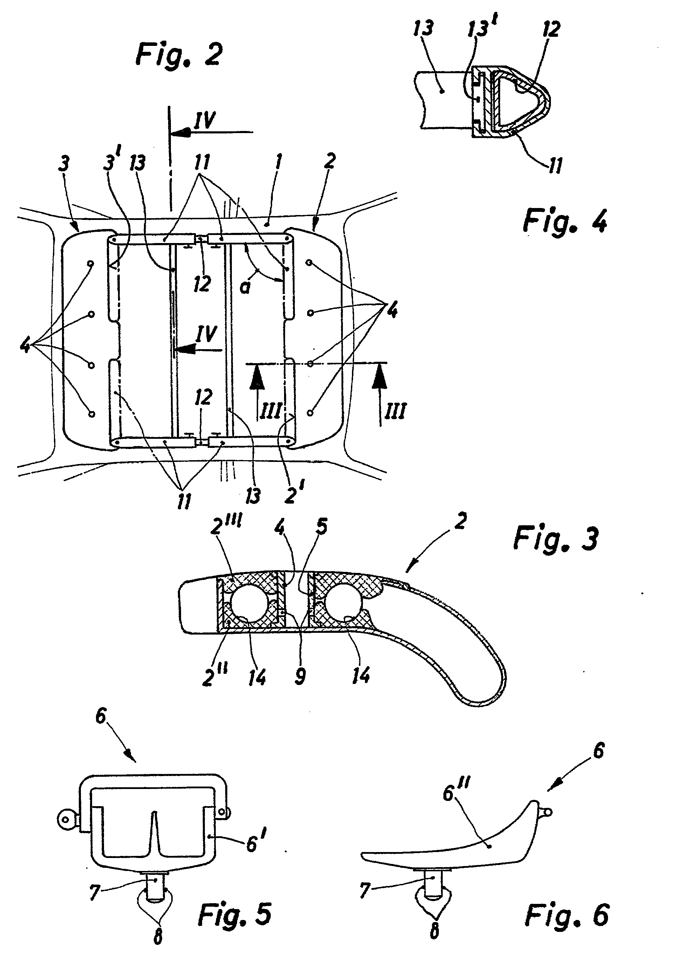

Der in Fig. 1 dargestellte Personenkraftwagen hat auf seinem Dach 1 zwei lösbar oder unlösbar befestigte Spoiler 2 und 3, welche sich über dessen Breite erstrecken und mit zum Fahrzeugdach 1 hin gewandten Luftdurchlaßöffnungen versehen sind, so daß der entstehende Luftstrom entlang des Fahrzeugdaches 1 - wie mit den Pfeilen angedeutet - fließen kann. Die Spoiler 2 und 3 erstrecken sich dabei längs des oberen Randes der Windschutz- bzw. Heckscheibe.

Wie in Fig. 2 ersichtlich, haben die beiden Spoiler 2 und 3 jeweils vier senkrecht verlaufende Ausnehmungen 4, die im Ausführungsbeispiel jeweils durch die Bohrung von in die Spoiler 2 und 3 eingesetzten Buchsen 5 gebildet sind. Damit auf den Spoilern 2 und 3 ein langgestrecktes Transportgut, beispielsweise Skier, parallel zur Fahrzeuglängsachse befestigt werden kann, liegen die Ausnehmungen 4 zweckmäßigerweise jeweils in einer Fluchtlinie. In die Ausnehmungen 4 der Buchsen 5 kann jeweils der Schaft 7 eines Transportguthalteelements 6 - das beispielsweise ein in den Fig. 5 und 6 dargestellter Skihalter 6' oder ein Surfbrettträger 6" sein kann - eingesetzt werden. Der Schaft 7 hat hierzu an seinem freien Endabschnitt zwei diametral gegenüberliegende, bedarfsweise gegen Federwirkung verschiebbare Fixierzapfen 8. Über diese ist der Schaft 7 nach seinem Einsetzen in die Ausnehmung 4 und einer Winkeldrehung (beispielsweise von etwa 90°) unter Eingriff in die Quernuten 9 der Buchse 5 mit dem Spoiler 2 bzw. 3 bajonettverschlußartig arretierbar.

Zur Bildung von dachgepäckartigen Elementen zwischen den Spoilern 2 und 3 ist an deren außenliegenden, gegenüberliegenden Eckbereichen jeweils eine Längsstrebe 11 angelenkt (Pfeilrichtungen a). Wie in Fig. 2 mit strichpunktierten Linien veranschaulicht, liegen diese in ihrer eingeschwenkten Ruhelage jeweils an den gegenüberliegenden Breitseiten 2' und 3' der Spoiler 2 und 3 an. Die Längsstreben 11 verlaufen in ihrer ausgeschwenkten Lage fluchtend miteinander und bilden somit zu den Breitseiten 2', 3' der Spoiler 2 und 3 einen rechten Winkel. Am freien Endabschnitt der beiden Längs-

streba 11 ist jeweils ein teleskopisch verschiebbares Verbindungsglied 12 vorgesehen (Fig. 4), das bei ausgeschwenkten Längsstreben 11 jeweils in die stirnseitig gegenüberliegende Längsstrebe 11 einschiebbar ist, so daß jeweils zwei in einer Fluchtlinie liegende Längsstreben 11 starr miteinander verbunden sind; bei zurückgeschobenem Verbindungsglied 12 sind die Längsstreben 11 dagegen einschwenkbar.

Die beiden, wie erwähnt starr miteinander verbundenen Längsstreben 11 stehen miteinander im Bereich ihrer freien Endabschnite durch in Fahrzeugquerrichtung verlaufende Querstrebn 13 in Verbindung. Diese haben an ihren beiden Endabschnitten jeweils ein T-förmiges Verbindungselement 13', das in eine in den Längsstreben 11 ausgebildete T-Nut eingreift. Hierdurch sind jeweils zwei in Fahrzeuglängsrichtung miteinander verbundene Längsstreben 11 auch in Fahrzeugquerrichtung starr fixiert. Die Querstreben 13 können zur Positionierung an den Längsstreben 11 zusätzlich zu dem T-förmigen Verbindungselement 13' mit Federklemmen versehen sein, die mit einem entsprechenden Lochraster in den Längsstreben 11 zusammenwirken. Damit die Querstreben 13 bei Nichtgebrauch rasch und unkompliziert verstaut werden können, haben die Spoiler 2 und/oder 3 jeweils zwei längsverlaufende, beiderseits der Buchsen 5 vorgesehene Hohlräume 14, welche zur Aufbewahrung der Querstreben 13 dienen. Die Spoiler 2 und 3 sind hierzu entweder einteilig als umschäumtes Blech oder als Kunststoffteil oder zweiteilig ausgebildet. Letztgenannte Ausführungsform ist in Fig. 2 veranschaulicht, wobei die etwa waagrecht verlaufende Trennebene zwischen dem Unterteil 2" und dem Oberteil 2"', also im Mittelbereich der Höhenerstreckung des Spoilers 2 verläuft. Bei einer derartigen zweiteiligen Ausbildung des Spoilers 2, 3 können die Hohlräume 14 fertigungsmäßig sehr einfach vorgesehen werden. Dabei kann auch das Unterteil 2" aus einer Blech- oder Kunststoffschale bestehen, während das Oberteil 2"' zweckmäßigerweise ein Schaumteil ist.

Die Ausnehmungen 4 können an der Oberseite der Spoiler 2 und 3 bei Nichtgebrauch der Transportguthalteelemente 6 durch geeignete Einrichtungen abgedeckt werden.

**Patentansprüche**

1. Kraftfahrzeug, insbesondere Personenkraftwagen, mit wenigstens einem Spoiler (2, 3), der auf dem Fahrzeugdach (1) festgelegt ist und sich über dessen Breite erstreckt, wobei der Spoiler (2, 3) wenigstens eine Aufnahme (Ausnehmung 4) zum lösbaren Anbringen eines Halteelements für das Transportgut aufweist, dadurch gekennzeichnet, daß der unmittelbar auf dem Fahrzeugdach (1) befestigte Spoiler (2, 3) selbsttragend ausgebildet ist und so für sich den Gepäckträger bildet.

2. Kraftfahrzeug nach Anspruch 1, mit jeweils einem im Bereich der Windschutz- und Heckscheibe liegenden Spoiler (2, 3), dadurch gekennzeichnet, daß beide Spoiler (2 und 3) an ihrem der Windschutz- bzw. Heckscheibe zugewandten Randbereich abwärts geneigt und damit der Karosserieform angepaßt sind.

3. Kraftfahrzeug nach Anspruch 2, dadurch gekennzeichnet, daß beide Spoiler (2 und 3) mit mehreren, senkrecht verlaufenden Ausnehmungen (4) versehen sind, in die jeweils der Schaft (7) eines Transportguthalteelements (6) eingesetzt werden kann.

4. Kraftfahrzeug nach Anspruch 3, dadurch gekennzeichnet, daß am einander gegenüberliegenden Eckbereich eines jeden Spoilers (2 und 3) jeweils eine Längsstrebe (11) angelenkt ist, welche in ausgeschwenkter Lage jeweils geradlinig sowie etwa rechtwinklig zur Breitseite (2', 3') verlaufen und dabei an ihrem zugekehrten Endbereich über ein Verbindungsglied (12) miteinander verbindbar sind, während die Längsstreben (11) in eingeschwenkter Ruhelage jeweils an den gegenüberliegenden Breitseiten (2', 3') der Spoiler (2, 3) anliegen.

5. Kraftfahrzeug nach Anspruch 4, dadurch gekennzeichnet, daß die Längsstreben (11) über wenigstens eine in Fahrzeugquerrichtung verlaufende Querstrebe (13) in Verbindung stehen, die an ihren Endabschnitten an den Längsstreben (11) jeweils lösbar befestigt ist.

6. Kraftfahrzeug nach Anspruch 5, dadurch gekennzeichnet, daß mindestens ein Spoiler (2, 3) wenigstens einen Hohlraum (14) zum Anordnen der Querstrebe (n) (13) aufweist.

7. Kraftfahrzeug nach Anspruch 6, dadurch gekennzeichnet, daß wenigstens ein Spoiler (2) aus einem Unterteil (2") und einem Oberteil (2"') besteht, deren etwa waagrecht verlaufende Trennebene im Mittelbereich der Höhenerstreckung des Spoilers (2) liegt.

**Claims**

1. A motor vehicle, more particularly a passenger car, comprising at least one spoiler (2, 3) which is secured to the vehicle roof (1) and extends over the width thereof, the spoilers (2, 3) having at least one holding fixture (recess 4) for releasably attaching a holder for transported articles, characterised in that the spoiler (2, 3), which is directly secured to the vehicle roof (1), is made self-supporting and thus by itself constitutes the luggage rack.

2. A motor vehicle according to claim 1, comprising a spoiler (2) near the windscreen and a spoiler (3) near the rear window, characterised in that the two spoilers (2 and 3) are inclined downwards at their edge region facing the windscreen or rear window respectively and are thus adapted to the shape of the car body.

3. A motor vehicle according to claim 2, characterised in that both spoilers (2 and 3) are formed with a number of vertical recesses (4), each adapted to receive the shank (7) of a transported-article holder (6).

4. A motor vehicle according to claim 3, characterised in that a longitudinal strut (11) is pivoted to opposite corner regions of each spoiler (2 and 3) and, when in the pivoted-out position, the longitudinal struts extend in a straight line and approximately at right angles to the wide side (2', 3') and their facing end regions are interconnected by a connecting element (12), whereas when pivoted inwards into the inoperative position, the longitudinal struts (11) rest on the respective opposite wide sides (2', 3") of the spoilers (2, 3).

5. A motor vehicle according to claim 4, characterised in that the longitudinal struts (11) are connected by at least one transverse strut (13) extending in the transverse direction of the vehicle, the end portions of the transverse strut being releasably connected to the longitudinal struts (11).

6. A motor vehicle according to claim 5, characterised in that at least one spoiler (2, 3) has at least one cavity (14) for storing the transverse strut or struts (13).

7. A motor vehicle according to claim 6, characterised in that at least one spoiler (2) comprises a bottom part (2") and a top part (2'''), parted by a substantially horizontal plane situated in the vertical central region of the spoiler (2).

**Revendications**

1. Véhicule automobile, notamment voiture particulière, avec au moins un déflecteur aérodynamique (2, 3) qui est fixé sur le toit (1) du véhicule et qui s'étend sur toute la largeur de celui-ci, ce déflecteur (2, 3) comportant au moins un logement (évidement 4) dont le montage amovible d'un élément de maintien pour des objets à transporter, véhicule automobile caractérisé en ce que le déflecteur (2, 3) fixé directement sur le toit (1) du véhicule est autoporteur et constitue ainsi en soi, le porte-bagages.

2. Véhicule automobile selon la revendication 1 avec respectivement un déflecteur (2, 3) placé au voisinage du pare-brise et de la lunette arrière, véhicule automobile caractérisé en ce que les deux déflecteurs (2 et 3) sont inclinés vers le bas sur leurs zones de bordure tournées respectivement vers le pare-brise ou bien vers la lunette arrière, et sont ainsi adaptés à la forme de la carrosserie.

3. Véhicule automobile selon la revendication 2, caractérisé en ce que les deux déflecteurs (2 et 3) sont munis de plusieurs évidements (4) s'étendant verticalement, dans lesquels peut respectivement être mis en place le fût (7) d'un élément de maintien (6) d'objets à transporter.

4. Véhicule automobile selon la revendication 3, caractérisé en ce que, aux zones d'angles placées l'une en face de l'autre de chacun des déflecteurs (2 et 3) est respectivement articulée, une entretoise longitudinale (11), ces entretoises, dans leur position déployée s'étendant respectivement en ligne droite ainsi qu'à peu près à angle droit par rapport aux côtés larges (2', 3') et pouvant alors être reliées ensemble à leurs zones d'extrémité en regard l'une de l'autre, par l'intermédiaire d'un organe de jonction (12), tandis que ces entretoises longitudinales (11), dans leur position de repos repliée, s'appliquent respectivement sur les côtés larges opposés (2', 3') des déflecteurs (2, 3).

5. Véhicule automobile selon la revendication 4, caractérisé en ce que les entretoises longitudinales (11) sont reliées par l'intermédiaire d'au moins une entretoise transversale (13) s'étendant en direction transversale du véhicule et qui est fixée de façon amovible à chacune de ses extrémités sur les entretoises longitudinales (11).

6. Véhicule automobile selon la revendication 5, caractérisé en ce qu'au moins un déflecteur (2, 3) comporte au moins une cavité (14) pour y ranger l'entretoise transversale (n) (13).

7. Véhicule automobile selon la revendication 6, caractérisé en ce qu'au moins un déflecteur (23) est constitué d'une partie inférieure (2") et d'une partie supérieure (2''') dont le plan de séparation s'étendant à peu près horizontalement se situe à peu près à mi-hauteur du déflecteur (2).

Fig. 1

Fig. 2

Fig. 4

Fig. 3

Fig. 5

Fig. 6